# DEMANDE DE BREVET EUROPEEN

(11) **EP 2 078 639 A2**
(43) Date de publication de la demande: **15.07.2009**
(21) Numéro de dépôt: 09150275.7
(22) Date de dépôt: 09.01.2009
(51) Int. Cl.: B60R 11/02, B60N 3/10

(54) **Adaptateur de montage d'un élément rapporté sur un aérateur de planche de bord**

(30) Priorité: 10.01.2008 FR 0850143
(71) Demandeur: ADM Concept, 87069 Limoges Cedex (FR)
(72) Inventeur: Mocquard, Dominique, 75014, PARIS (FR)
(74) Mandataire: Delprat, Olivier

(57) **Abrégé**

Cet adaptateur pour aérateur (A) de planche de bord de véhicule automobile comprend une première partie (41) destinée à venir se fixer à l'aérateur et une deuxième partie (43) destinée à venir se plaquer contre la planche de bord.

La deuxième partie comprend des moyens de fixation d'un support (10) pour un élément rapporté destiné à être monté sur l'aérateur.

## Description

L'invention se rapporte aux équipements de véhicules automobiles et concerne en particulier le montage d'un élément rapporté sur une planche de bord d'un véhicule automobile par l'intermédiaire d'un support dédié.

Plus particulièrement, l'invention se rapporte au montage d'un tel support sur un aérateur d'une planche de bord de véhicule automobile.

On notera toutefois que l'on ne sort pas du cadre de l'invention lorsque le support, et en particulier l'enjoliveur, est destiné à être monté dans d'autres types de véhicules. Ainsi, l'invention concerne, de manière générale, le montage d'un élément rapporté sur tout type de véhicule, tel qu'un véhicule automobile, un aéronef, une machine agricole, ..., pourvu d'un aérateur.

Une des applications de l'invention concerne le montage d'un appareil électronique nomade sur une planche de bord d'un véhicule.

Par « appareil électronique nomade », on entend, dans le cadre de la présente description, tout type d'appareil électronique portatif, grand public, autonome et destiné à exécuter une ou plusieurs fonctions élémentaires, tels qu'un navigateur GPS, un lecteur numérique portatif de musique, de type lecteur MP3, un assistant personnel, un poste téléphonique mobile, ou encore un support de stockage de données tel qu'une clé USB, une carte SIM, une carte mémoire, ...

On ne sort pas d'avantage du cadre de l'invention lorsque l'élément rapporté est d'une autre nature.

Mais une application particulièrement intéressante de l'invention concerne le montage d'un navigateur GPS sur un aérateur d'une planche de bord d'un véhicule automobile.

Comme on le sait, ce type d'appareil peut être intégré dans un véhicule comme système embarqué d'origine.

Cependant, les appareils électroniques nomades évoluent sans cesse et deviennent vite obsolètes. Un tel système embarqué d'origine n'est donc pas prévu pour accueillir des nouveaux types d'appareils.

D'autre part, ces appareils nomades sont habituellement fixés sur les planches de bord des véhicules automobiles à l'aide d'un système classique de ventouse.

Mais ce système, bien que permettant de rendre le support de l'appareil indépendant de la planche de bord du véhicule, ne prend pas en considération l'aspect esthétique général du véhicule.

En outre, le système de ventouse ne permet pas une fixation solide et fiable de l'appareil à la planche de bord, notamment en ce qui concerne les véhicules soumis à des vibrations, ce qui est susceptible d'entraîner la perte du support par désolidarisation.

Il existe également des supports d'appareils nomades qui sont intégrés dans la planche de bord d'un véhicule afin de ne pas dénaturer l'esthétique d'origine de ladite planche. On pourra à cet égard se référer par exemple à la demande de brevet français non publiée, déposée sous le numéro 0655146 au nom du demandeur.

Mais, ce type de support nécessite de prévoir des découpes dans la planche de bord, ce qui les rend difficilement amovibles.

Pour palier cet inconvénient, il a été proposé un support pour appareil électronique nomade destiné à venir se monter sur un équipement du véhicule en procurant l'impression que ce support a été installé en première monte.

Il a, en particulier, été proposé un tel support qui est destiné à venir se monter sur un aérateur de la planche de bord sur lequel vient se monter un appareil nomade de type navigateur GPS. On pourra, à cet égard, se référer à la demande de brevet français non publiée, déposée sous le numéro 0757317 au nom du demandeur.

Ce type de support vient se monter aux lieu et place d'un enjoliveur dont est pourvu l'aérateur.

Mais certains modèles de véhicule automobile sont pourvus d'aérateurs qui ne permettent pas le montage direct du support aux lieu et place de l'enjoliveur.

Le but de l'invention est donc de palier cet inconvénient.

L'invention a donc pour objet, selon un premier aspect, un adaptateur pour aérateur d'une planche de bord de véhicule automobile, comprenant une première partie destinée à venir se fixer à l'aérateur et une deuxième partie comprenant des moyens de fixation d'un support pour un élément rapporté destiné à être monté sur l'aérateur.

En d'autres termes, l'invention propose un adaptateur venant se monter aux lieu et place de l'enjoliveur de l'aérateur pour permettre le montage ultérieur d'un élément rapporté sur l'adaptateur ou, le cas échéant, le montage d'un enjoliveur de finition lorsque aucun élément n'est monté sur l'adaptateur.

Selon une autre caractéristique de l'invention, les moyens de fixation sont des moyens de fixation amovibles.

Selon encore une autre caractéristique de l'adaptateur selon l'invention, la première partie comprend des moyens amovibles de fixation de l'adaptateur sur l'aérateur.

Par exemple, la première partie a une forme générale cylindrique et comprend une jupe venant se monter sur une surface complémentaire de l'aérateur.

Dans divers modes de réalisations, le support peut être un support pour appareil électronique nomade.

Mais il peut également être constitué par un support pour récipient, de type bouteille ou gobelet, ou un support pour panneau solaire.

L'invention a également pour objet, selon un autre aspect, un aérateur pour planche de bord de véhicule automobile comprenant un tube venant se monter sur un conduit d'aération, une pièce intermédiaire portant un ensemble de volets d'aération et montée de manière orientable sur ledit tube, et un adaptateur tel que défini ci-dessus.

L'invention a également pour objet un kit de montage d'un élément sur un aérateur de planche de bord, comprenant :
- un outil de démontage d'un enjoliveur monté de manière amovible sur un aérateur; et
- un adaptateur qui comprend une première partie destinée à venir se monter sur l'aérateur, et une deuxième partie comprenant des moyens de fixation dudit élément.

L'invention a encore pour objet, selon un troisième aspect, un procédé de montage d'un élément sur un aérateur de planche de bord de véhicule automobile comprenant un tube, une pièce intermédiaire portant un ensemble de volets et montée de manière orientable sur ledit tube et un enjoliveur monté de manière amovible sur le tube ou sur la pièce intermédiaire.

Ce procédé comprend les étapes de :
- démontage de l'enjoliveur ;
- montage d'un adaptateur comprenant une première partie destinée à venir se monter sur l'aérateur et une deuxième partie comprenant des moyens de fixation dudit élément ; et
- montage dudit élément sur ledit adaptateur.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue en perspective d'un support destiné au montage d'un navigateur GPS sur un aérateur de planche de bord ;
- la figure 2 montre le support de la figure 1 après installation d'un navigateur GPS ;
- la figure 3 illustre une partie d'une planche de bord d'un véhicule automobile après montage d'un support d'un navigateur GPS ;
- la figure 4 est une vue éclatée d'un aérateur de planche de bord d'un véhicule automobile et illustre le principe de montage du support d'appareil électronique nomade conforme à l'invention ; et
- la figure 5 montre en perspective un aérateur après montage d'un adaptateur conforme à l'invention.

Dans la description qui va suivre, on va considérer un exemple de mise en oeuvre de l'invention dans lequel un appareil électronique nomade, constitué par un navigateur GPS est monté sur une planche de bord d'un véhicule automobile. Mais, l'invention concerne de manière générale, le montage d'un élément rapporté sur une planche de bord et, en particulier sur un aérateur.

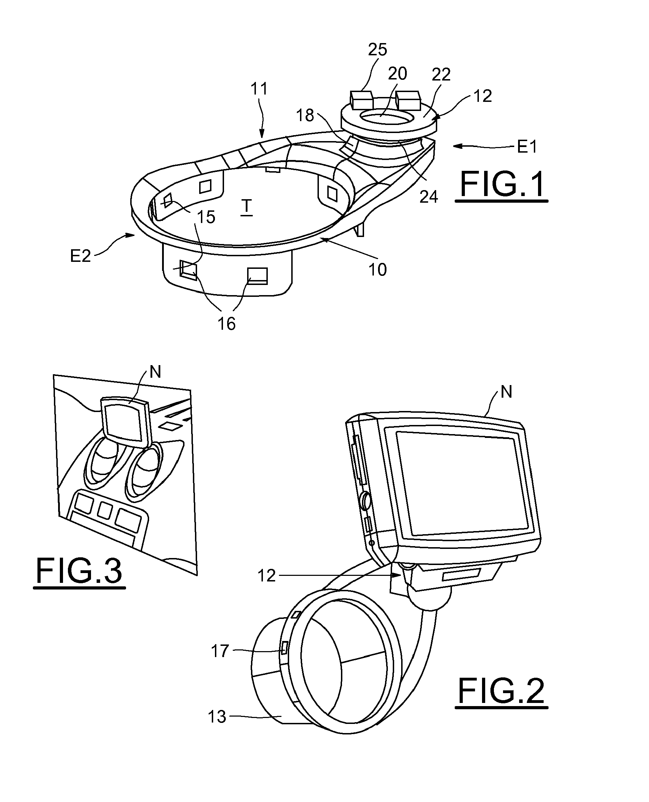

Sur les figures 1 et 2, on a représenté une vue en perspective d'un support 10 de maintien d'un appareil électronique nomade.

Le support 10 est destiné à intégrer un appareil électronique nomade à une planche de bord d'un véhicule automobile.

Dans l'exemple de réalisation représenté, le support est destiné au montage d'un navigateur GPS N (figure 2) et est prévu pour venir se fixer sur un équipement de la planche de bord d'un véhicule automobile, constitué ici par un aérateur.

Dans l'exemple illustré, dans lequel le support vient se monter sur un aérateur, le support 10 comporte une embase 11 et un socle 12. L'embase 11 a une forme générale ovoïde et comporte une première extrémité E1 servant au montage du navigateur N par l'intermédiaire d'un socle 12 approprié et une deuxième extrémité E2 dédiée au montage du support 10 sur l'aérateur. Le support 10 comporte à cet effet un trou T sous la forme d'un évidement pratiqué dans la deuxième extrémité E2 de dimension et de forme complémentaire de celles d'un conduit 13 d'aérateur (figure 3). Des pattes d'encliquetage 15, ici au nombre de trois, s'étendent à partir du bord du trou T et, en particulier, à partir d'une face de l'embase 11 opposée à la face sur laquelle vient se monter le socle 12.

Comme on le voit, chaque patte comprend un ensemble d'orifices, tels que 16, par exemple au nombre de deux, dans lesquels s'encliquètent des crans d'encliquetage 17 complémentaires pratiqués dans la surface périphérique externe, ou interne, du conduit 13, dédiés, de manière conventionnelle, au montage par encliquetage d'un enjoliveur pour l'aérateur.

Mais on ne sort pas du cadre de l'invention lorsque les crans sont pratiqués dans les pattes 15 et les orifices sont prévus sur le conduit.

Le support vient se monter aux lieu et place d'un enjoliveur s'encliquetant sur le conduit 13.

Mais, comme cela sera décrit en détail par la suite, lorsque l'aérateur est inapproprié pour recevoir directement le support 10, on utilise un adaptateur venant se monter aux lieu et place de l'enjoliveur de l'aérateur et sur lequel vient se monter le support 10.

Dans ce cas, lorsque le support 10 vient se monter sur un adaptateur rapporté, et non plus sur le conduit de l'aérateur, on s'affranchit des moyens de fixation prévus sur le conduit de l'aérateur de sorte que l'on peut utiliser des moyens d'assemblage du support sur l'adaptateur ayant une autre configuration.

Comme on le voit sur la figure 1, la première extrémité E1, dédiée au montage du socle 12, comporte une jupe 18, par exemple de forme générale tronconique, dans laquelle s'engage le socle 12.

En ce qui concerne le socle 12, celui-ci comporte un corps 20 pourvu à une extrémité d'une tête de fixation 22, destinée à recevoir l'appareil nomade, et à son extrémité opposée d'un pied 24. Ce pied 24 comporte des moyens d'encliquetage destinés à s'encliqueter de manière amovible dans la jupe 18. Par exemple, on prévoira une gorge annulaire dans le pied destiné à recevoir par déformation élastique le bord d'extrémité libre de la jupe 18.

La tête 22 comporte, quant à elle, des pions 25 servant à la fixation du navigateur N en s'engageant dans des logements complémentaires prévus dans le boîtier du navigateur.

Ainsi, après montage du support sur l'aérateur et après montage, le navigateur est maintenu par le socle 12, lequel est encliqueté de manière amovible dans la jupe 18. On obtient ainsi l'agencement visible sur la figure 3.

Comme indiqué précédemment, l'embase 10 peut venir se monter directement par encliquetage sur le conduit de l'aérateur.

Toutefois, conformément à l'invention, dans le cas où l'aérateur ne permet pas un montage direct de l'embase 11, le support 10 vient se monter sur l'aérateur par l'intermédiaire d'un adaptateur de support rapporté aux lieu et place d'un enjoliveur de finition conventionnel équipant traditionnellement l'aérateur.

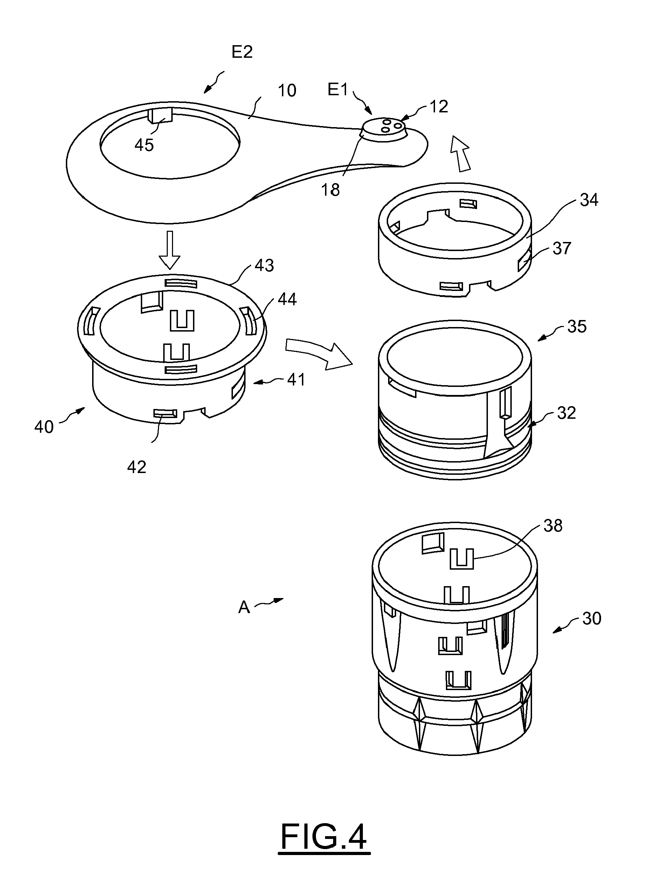

En effet, en référence à la figure 4, un aérateur A comporte traditionnellement un tube 30 qui vient se monter dans le conduit de l'aérateur, une pièce intermédiaire 32 qui vient se monter de manière orientable dans le tube 30 et un enjoliveur de finition 34 qui vient se monter autour de la pièce intermédiaire 32 pour garantir l'esthétique de la planche de bord dans laquelle l'aérateur A vient se monter.

Comme cela est connu en soi, la pièce intermédiaire 32 vient se monter par encliquetage dans le tube 30 de manière orientable angulairement afin de pouvoir adopter toute orientation souhaitée par l'utilisateur. Au niveau de son extrémité 35 tournée vers l'intérieur de l'habitacle, la pièce intermédiaire 32 comporte un certain nombre de volets orientables (non représentés).

Comme on le voit, l'enjoliveur de finition 34 comporte un certain nombre de lumières 37, régulièrement réparties autour de sa périphérie pour venir s'encliqueter dans des pattes, telles que 38, prévues dans la paroi constitutive du tube 30. Ce type d'aérateur est inapproprié pour recevoir un support 10.

Ainsi, pour le montage d'un tel support, on substitue à l'enjoliveur 34, un adaptateur 40 rapporté.

Comme on le voit, cet adaptateur 40 comporte une première partie 41 en forme de jupe globalement cylindrique, de forme identique à celle de l'enjoliveur 34 et qui comporte un certain nombre de lumières, telles que 41, qui permettent l'encliquetage de l'enjoliveur 40 dans le tube 30, par l'intermédiaire des pattes 38.

L'adaptateur 40 comporte encore une deuxième partie 43 en forme de collerette qui est destinée, après insertion de l'adaptateur 40 dans le tube 30, autour de la pièce intermédiaire 32, à être appliqué contre la planche de bord.

Comme on le voit, la deuxième partie 43 comporte un certain nombre d'orifices, tels que 44, dans lesquels viennent s'engager des pattes recourbées, telles que 45, prévues sur l'embase 11 du support 10.

On crée ainsi un adaptateur, qui vient se monter aux lieu et place de l'enjoliveur 34 conventionnel, lequel adaptateur 40 peut servir de support d'accrochage de tout type de dispositif ou élément rapporté.

En premier lieu, lorsque aucun élément ou dispositif n'est monté sur l'adaptateur, on prévoira le montage d'un enjoliveur de finition sur l'adaptateur afin de garantir l'aspect esthétique de l'assemblage.

Mais l'adaptateur peut être prévu, comme représenté pour recevoir un support sur lequel vient se monter un appareil électronique nomade, tel qu'un GPS.

Pour monter un tel support dans un aérateur sans avoir à le démonter, il suffit simplement de dégager les pattes 38 des lumières 37 prévues dans l'enjoliveur de finition 34 au moyen d'un outil de démontage approprié, de déposer, par traction l'enjoliveur 34, de le remplacer par un adaptateur 40, puis de monter le support 10 sur l'adaptateur 40, par insertion des pattes recourbées 45 dans les orifices 44 et déplacement angulaire du support jusqu'au verrouillage de ce dernier dans l'adaptateur 40. L'outil de démontage peut par exemple se présenter sous la forme d'un manche, muni d'une fourche dont les branches sont élastiquement déformables suivant une direction perpendiculaire au manche, et sont ainsi aptes à venir appuyer radialement sur les pattes 38 de l'enjoliveur 34 pour les dégager des lumières 37.

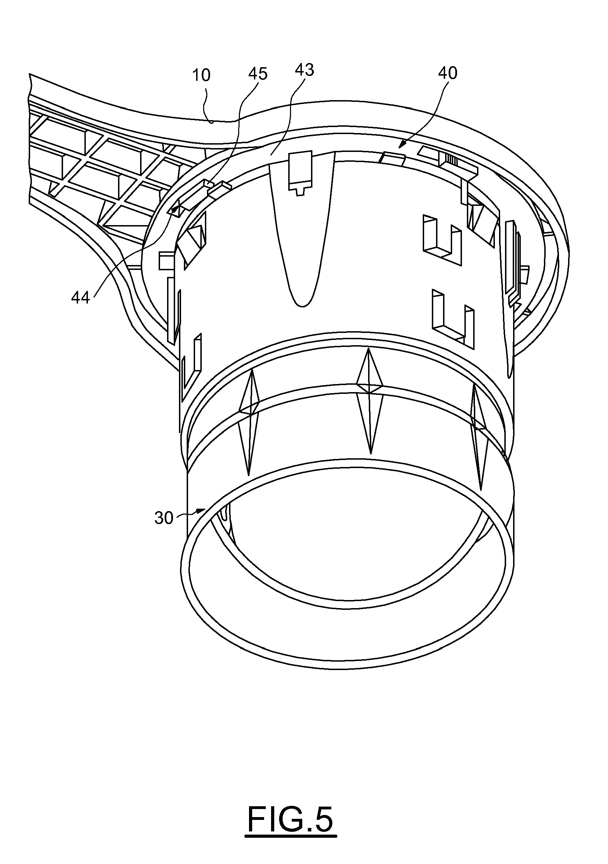

On obtient alors l'ensemble illustré à la figure 5.

Grâce à l'adaptateur, le support 10 vient se monter sur l'enjoliveur de support et non plus sur l'aérateur. En d'autres termes, les moyens de montage du support sont dissociés des moyens de montage de l'adaptateur.

Comme indiqué précédemment, l'invention n'est pas limitée au mode de réalisation décrit.

En effet, l'adaptateur qui vient d'être décrit peut également être utilisé, de manière générale, pour le montage d'un élément rapporté sur une planche de bord, en particulier sur un aérateur.

Ainsi, l'adaptateur peut être utilisé pour recevoir un support pour tout type de dispositif, élément ou appareil rapporté, tel qu'un récipient, de type bouteille ou gobelet, un panneau solaire pour permettre la recharge de dispositifs électroniques.... Le support peut inclure, ou être adapté pour recevoir, divers types de connecteurs électriques ou électroniques, notamment pour appareils électroniques nomades.

On notera en particulier que le montage de l'adaptateur permet de conserver la fonctionnalité initiale de l'aérateur, ce qui est appréciable lorsque le support monté sur l'adaptateur est un porte-bouteille ou un porte-gobelet qui est ainsi en contact avec un flux d'air de climatisation issu de l'aérateur.

## Revendications

1. Adaptateur pour aérateur (A) d'une planche de bord de véhicule automobile, **caractérisé en ce qu'**il comprend une première partie (41), destinée à venir se fixer à l'aérateur, ladite première partie étant de forme générale cylindrique et comprenant une jupe venant se monter sur une surface complémentaire de l'aérateur, et une deuxième partie (43) comprenant des moyens de fixation d'un support (10) pour un élément rapporté destiné à être monté sur l'aérateur.

2. Adaptateur selon la revendication 1, **caractérisé en ce que** les moyens de fixation sont des moyens de fixation amovibles.

3. Adaptateur selon l'une quelconque des revendications 1 à 2, **caractérisé en ce que** la première partie comprend des moyens amovibles de fixation du dispositif dans l'aérateur.

4. Adaptateur selon l'une quelconque des revendications 1 à 3, **caractérisé en ce que** le support est un support pour appareil électronique nomade.

5. Adaptateur selon l'une quelconque des revendications 1 à 3, **caractérisé en ce que** le support est un support pour récipient, de type bouteille ou gobelet, ou un support pour panneau solaire.

6. Aérateur pour planche de bord de véhicule automobile comprenant un tube (30) venant se monter sur un conduit d'aération, une pièce intermédiaire (32) portant un ensemble de volets d'aération et montée de manière orientable sur ledit tube (30) et un adaptateur selon l'une quelconque des revendications 1 à 5.

7. Kit de montage d'un élément sur un aérateur de planche de bord, **caractérisé en ce qu'**il comprend :
- un outil de démontage d'un enjoliveur monté de manière amovible sur un aérateur; et
- un adaptateur qui comprend une première partie destinée à venir se monter sur l'aérateur, et une deuxième partie comprenant des moyens de fixation dudit élément.

8. Procédé de montage d'un élément sur un aérateur de planche de bord de véhicule automobile comprenant un tube (30), une pièce intermédiaire (32) portant un ensemble de volets d'aération et montée de manière orientable sur ledit tube (30) et un enjoliveur monté de manière amovible sur le tube ou sur la pièce intermédiaire, **caractérisé en ce qu'**il comprend les étapes de :
- démontage de l'enjoliveur (34) ;
- montage d'un adaptateur comprenant une première partie destinée à venir se monter sur l'aérateur et une deuxième partie comprenant des moyens de fixation dudit élément ; et
- montage dudit élément sur ledit adaptateur.
